# EUROPEAN PATENT SPECIFICATION

(11) **EP 0 858 676 B1**
(45) Date of publication and mention of the grant of the patent: **13.02.2002**
(21) Application number: 96937192.1
(22) Date of filing: 04.11.1996
(51) Int. Cl.: H01M 4/36, H01M 10/40

(54) **METHOD FOR THE PRODUCTION OF A NEGATIVE ELECTRODE COMPOSITION FOR LITHIUM SECONDARY BATTERIES AND USE OF SAID COMPOSITION IN LITHIUM SECONDARY BATTERIES.**
VERFAHREN ZUR HERSTELLUNG EINER NEGATIVE ELEKTRODENZUSAMMENSETZUNG FÜR LITHIUM SEKUNDÄRBATTERIEN UND DEREN VERWENDUNG IN LITHIUMSEKUNDÄRBATTERIE
PROCEDE DE FABRICATION D'UNE COMPOSITION D'ELECTRODE NEGATIVE DESTINEE A DES ACCUMULATEURS AU LITHIUM ET UTILISATION DE CETTE COMPOSITION DANS LES ACCUMULATEURS AU LITHIUM

(30) Priority: 02.11.1995 DK 122695
(43) Date of publication of application: 19.08.1998
(73) Proprietor: DANIONICS A/S, 5260 Odense S (DK)
(72) Inventor: YDE-ANDERSEN, Steen, DK-5260 Odense S (DK); RAO, Ningling, DK-5792 Aarslev (DK); ANDERSEN, Torben, Paarup, DK-5250 Odense SV (DK)
(74) Representative: Marchant, James Ian
(86) International application number: DK9600456
(87) International publication number: WO9716860

(56) References cited:
- WO-A-94/18714
- US-A- 5 028 500
- US-A- 5 219 680
- PATENT ABSTRACTS OF JAPAN, Vol. 16, No. 513, E-1283; & JP,A,04 190 561 (SANYO ELECTRIC CO. LTD.), 8 July 1992.
- IIJIMA ET AL: 'Electrodic Characteristics of various carbon materials for lithium rechargeable batteries' SYNTHETIC METALS vol. 9, no. 20, 1995, pages 1 - 20
- T.D. TRAN ET AL: 'Commercial Carbonaceous Materials as Lithium Intercalation Anodes' J.ELECTROCHEM. SOC vol. 142, no. 10, 1995, pages 3297 - 3302

## Description

The present invention relates to a method for the production of a lithium secondary battery.

The initial concept of the secondary lithium electrochemical cell was based on lithium metal negative electrodes but this caused severe safety problems. Upon recharging of discharged cells, a non-uniform plating of lithium was observed on the electrode which led to the formation of dendrites, porous negative electrode structures, loss of active material, short-circuiting and thermal run-away (see e.g. Pistoia, G.: Industrial Chemistry Library, Vol. 5 (1994) pp. 1-47).

For this reason the concept of the lithium metal electrode gave way to the concept of the lithium-ion carbon-based electrode According to the latter concept, lithium is intercalated into a carbon structure upon charging of the electrochemical cell (cf. Pistoia, G.: Industrial Chemistry Library, Vol. 5 (1994) pp. 1-47). Upon subsequent discharging of the cell, lithium is deintercalated from the carbon structure. This concept offers as the main advantages improved safety in operation of the battery and improved cyclability. However, capacity is reduced compared to the pure lithium metal electrode. Furthermore, a substantial loss of capacity is observed due to irreversible reactions between the carbon material and the electrolyte (see e.g. Ebner, W. *et al:* Solid State Ionics, Vol 69 (1994) pp. 238-56).

Electrode capacity, rate capability and cyclability are related to the physico-chemical characteristics of the constituent carbons (cf. Ebner, W. *et al:* Solid State Ionics, Vol 69 (1994) pp. 238-56). Ordered carbon structures such as graphite are usually referred to as offering high reversible intercalation capacity, but poor cyclability and rate capability as the electronic conductivity is strongly reduced upon intercalation. Disordered carbon structures such as carbon blacks are referred to as offering high electronic conductivity, but as subject to high irreversible capacity losses as the surface groups thereof react irreversibly with the electrolyte.

Mixtures of coke or graphite and carbon blacks provide electrodes with high electronic conductivity, even in the charged state. Therefore, addition of carbon black to a coke or graphite-based electrode improves the rate capability and cycle life compared to pure coke- or graphite electrode (see e.g. Tarascon, J. M. and Guyomard, D.: Electrochemica Acta, Vol 38-9 (1993) pp. 1221-31 EP 0 434 776 and JP 6-333559).

Hitherto, carbon black has been added to coke or graphite-based electrode structures only in order to raise the electronic conductivity of the electrode. It has been reported that such additions are accompanied by an unwanted increase in irreversible loss of capacity and a corresponding decrease in reversible electrochemical capacity. Thus, whereas the capacity of pure coke electrodes is approximately 186 mAh/g, based on the composition Li_{0.5}C₆, the capacity of the coke/carbon black mixtures is found to be lower.

In a paper by Dahn *et al* in Electrochimica Acta, vol. 38-39 (1993) pp. 1179-91 it is pointed out that high reversible capacities can be obtained for graphitic carbons as well as for highly disordered carbons. In addition, US-A-5,219,680 describes the use of microcrystalline or amorphous carbons as the essential component of lithium intercalation structures. The preferred amorphous carbons are of the acetylene black type, showing high surface area, in particular higher than 20 m²/g. In this case, however, the irreversible capacity loss was high and more specifically only 50-60% of the initial charge capacity was available as reversible capacity.

WO 94/18714 of Valence Technology, Inc. describes negative electrode structures for rechargeable lithium batteries which comprise particles consisting of metals and semi-metals such as aluminium, boron or silicon dispersed therein as well as particles of carbon. Preferred carbons are high surface furnace blacks and acetylene blacks.

JP-A-4190561 relates to a lithium secondary battery with a non-aqueous electrolyte wherein an amorphous carbon material having a BET surface area of 10 m²/g, preferably a coke, is added to the positive electrode as a conductive agent.

Tran *et al,* J. Electrochem. Soc., 142(10), 3297-3302 (1995) examined a number of commercial carbonaceous materials (including two samples of carbon black) as lithium intercalation anodes. The authors concluded that reversible capacity and irreversible capacity loss depend on the type of binder, carbon type, morphology, and phosphorous doping concentration.

As the active lithium available in a rocking chair battery is provided by the lithium-containing positive electrode structure the irreversible capacity loss is detrimental in terms of cell balance.

It is thus an object of the invention to provide a method for the production of a lithium secondary battery with improved performance in terms of capacity, rate capability, cyclability and irreversible capacity loss.

According to one aspect, the present invention provides a method for the production of a lithium secondary battery which comprises:
forming a negative electrode precursor composition in the form of a uniform viscous slurry by grinding carbon in a solvent containing a binder;
coating the negative electrode precursor composition onto a substrate;
evaporating the solvent and drying at elevated temperature to form a negative electrode comprising a negative electrode composition comprising carbon as negative electrode active material coated onto the substrate; and
assembling the negative electrode into a cell together with a positive electrode and a non-aqueous electrolyte including a lithium salt,
characterised in that
the carbon used to form the negative electrode precursor composition comprises a carbon black having a BET specific surface area of at most 20m²/g in an amount of at least 10% by weight of the negative electrode composition.

According to another aspect, the present invention provides use of a carbon black having a BET specific surface area of at most 20m²/g for the formation of a negative electrode precursor composition also comprising binder and solvent, said negative electrode precursor composition on coating onto a substrate, evaporating the solvent and drying at elevated temperature providing a negative electrode for a lithium secondary battery in the form of a negative electrode composition coated onto the substrate, said carbon black comprising at least 10% by weight of said negative electrode composition and said negative electrode, when assembled into a cell together with a positive electrode and a non-aqueous electrolyte including a lithium salt, providing a cell with an irreversible capacity loss of less than 37.5% of its initial capacity.

Preferably the carbon black has a BET specific surface area of 2 to 20 m²/g.

The carbon black used according to the invention can be any low surface carbon black obtained through incomplete combustion or pyrolysis of hydrocarbons or natural gas, including low surface versions of channel black, furnace black, lampblack and thermal black. A detailed characterisation of these carbon blacks and methods for the production thereof are given in "Recent Carbon Technology", JEC Press Inc., Edited by T. Ishikawa & T. Nagao (1983), and references therein.

The preferred carbon blacks are low surface area lampblacks prepared by incomplete combustion of aromatic hydrocarbons and low surface area thermal blacks prepared by pyrolytic decomposition of natural gas or methane.

In one embodiment of the invention the carbon black is a low surface area lampblack having a BET surface area of 5 to 20 m²/g. preferably 15 to 20 m²/g.

It has been shown that cyclability as well as rate capability of the battery produced according to the invention, depends on the absorption properties of the carbon black. This might be due to the fact that the DBP (dibutylphthalate) absorption is related to the degree of structure of the carbon black. A high degree of structure provides high electronic conductivity and ease of dispersion.

The lampblack used according to this embodiment preferably has a DBP absorption of 50-200 ml/100 g, more preferably of 50-140 ml/100 g.

In another embodiment of the invention the carbon black is a low surface area thermal black having a BET surface area of 2 to 20 m²/g. preferably 2 to 10 m²/g.

The thermal black used according to this embodiment preferably has a DBP (dibutylphthalate) absorption of 30-100 ml/100 g, more preferably of 30-80 ml/100 g.

The mean particle size of the carbon black used according to the invention is preferably within the range of 60 to 500 nm. More preferably the mean particle size is within the range of 60-150 nm in the case of lampblacks and within the range of 100-500 nm for thermal blacks. Within these ranges the electronic conductivity, which is inversely related to the particle size, is still sufficient to ensure a high rate capability.

The most preferred lampblack is the Degussa Lampblack 101. The most preferred thermal black is the Kværner thermal black as produced by the Kværner CB&H process described in WO-A-93/20154.

The carbon black used according to the invention may constitute the predominant part of the negative electrode precursor or it may be present as an additive in negative electrode precursors based predominantly on more ordered carbon structures such as coke or graphite.

Thus, in a preferred embodiment of the invention the negative electrode composition comprises at least 80% by weight, preferably at least 90% by weight, low surface area carbon black, the remaining part of the electrode composition essentially being a binder, preferably a polymeric binder.

In another preferred embodiment of the invention the negative electrode composition comprises 10 to 90% by weight of low surface area carbon black, 0 to 89% by weight of a more ordered carbon material, preferably coke and/or graphite, and 1 to 10% by weight of a binder, preferably a polymeric binder.

In yet another preferred embodiment of the invention the negative electrode composition comprises 10 to 40% by weight of low surface area carbon black, 50 to 89% by weight of a more ordered carbon material, preferably coke and/or graphite, and 1 to 10% by weight of a binder, preferably a polymeric binder.

The "more ordered carbon material" used in this embodiment may be any carbon material having a higher degree of crystalline order than typical "carbon blacks", and wherein the interlayer spacing (defined as half the length of the unit cell c-axis) is less than 3.44Å. More ordered carbon materials include cokes such as petroleum cokes produced by pyrolysis of petroleum residues, for example by delayed coking or fluidized coking, gilsonite coke produced by coking of natural gilsonite, pitch coke produced by coking of coal tar pitch, for example by the retort coking method or the delayed coking method, and graphites such as natural or artificial graphite. A detailed characterisation of these carbon materials and methods for the production thereof is given in "Recent Carbon Technology", JEC Press Inc., Edited by T. Ishikawa & T. Nagao (1983), and references therein.

The coke materials used in this embodiment preferably have a mean particle size of 1-50 µm and a BET surface area of 8-20 m²/g. The most preferred coke materials are Lonza coke R-LIBA-A and Asbury #8442-R.

The graphite materials used in this embodiment preferably have a mean particle size of 1-50 µm and a BET surface area of 5-40 m²/g. The most preferred graphite materials are Lonza Graphite KS6 and Asbury HPM 850.

The method according to the present invention is simple and economically advantageous and batteries produced thereby offer improved performance in terms of capacity, rate capability, cyclability and reduced irreversible capacity loss.

According to the method of the invention, the carbon black, and optionally a more ordered carbon material, preferably coke and/or graphite, is ground in a solvent containing a binder to produce a negative electrode precursor in the form of a uniform, viscous slurry. The slurry is then coated onto a substrate, preferably a metal foil substrate, the solvent is evaporated and the coating is dried at elevated temperature to form a negative electrode comprising a negative electrode composition coated onto the substrate.

The binder is preferably a polymeric binder, more preferably EPDM (ethylene-propylene-diene-polymethylene).

The solvent used in the electrode manufacturing process is preferably an alicyclic compound, such as cyclohexane.

In the following Examples I to IV, production of various embodiments of the electrode composition is illustrated and Example V relates to the production of electrochemical cells therefrom.

### Example I

2.6 g of coke (Lonza R-LIBA-A), 1.2 g of lampblack (Degussa lampblack 101) and 4.0 g of a 5% solution of EPDM (ethylene-propylene-diene-polymethylene; amorphous, oilfree, of medium saturation, ethylene content of 50%) in cyclohexane was introduced into a ⌀100 mm porcelain mortar. The resulting mixture was subjected to 30 min. of grinding in order to mix the components and to produce a uniform slurry for coating (electrode precursor composition). During mixing a further 7 g of cyclohexane was added. A portion of the slurry was poured onto a nickel foil substrate and spread out on the substrate by wirebar coating, thereby forming a uniform thin layer. The coated layer was kept in air for 20 min., and then dried in an oven at 110°c for 3 hours. The resulting negative electrode (comprising negative electrode composition coated on the substrate) was tested in half cells against lithium metal, using a lithium salt containing non-aqueous electrolyte. In the test the electrodes were charged and discharged galvanostatically between 0 V and 1.5 V vs Li/Li⁺. Irreversible capacity losses were derived from the first charge-discharge cycle, whereas the reversible capacity was defined as the first discharge capacity.

The negative electrode composition comprised 65% by weight coke, 30% by weight lamp black and 5% by weight of binder and provided a reversible capacity of 240 mAh/g. The irreversible capacity loss was lower than 70mAh/g, (lower than 22%). The discharge-charge cyclability of the electrode exceeded 300 cycles at 100% of the initial reversible capacity.

The reversible capacity of 240 mAh/g was obtained at a 1 hour discharge rate. Even at a 20 min. (¹/₃ hour) discharge rate, the reversible capacity was 235 mAh/g.

### Example II

1.9 g of lampblack (Degussa lampblack 101) and 2.0 g of a 5% solution of EPDM (ethylene-propylene-diene-polymethylene; amorphous, oilfree, of medium saturation, ethylene content of 50%) in cyclohexane was introduced into a ⌀100 mm porcelain mortar. The resulting mixture was subjected to 30 min. of grinding in order to mix the components and to produce a uniform slurry for coating (electrode precursor composition). During mixing a further 5 g of cyclohexane was added. A portion of the slurry was poured onto a nickel foil substrate and spread out on the substrate by wirebar coating, thereby forming a uniform thin layer. The coated layer was kept in air for 20 min., and then dried in an oven at 110°C for 3 hours. The resulting negative electrode (comprising negative electrode composition coated on the substrate) was tested in half cells against lithium metal, using a lithium containing non-aqueous electrolyte.

The negative electrode composition comprised 92% by weight lamp black and 8% of binder and provided a reversible capacity of up to 527 mAh/g. The irreversible capacity loss was lower than 264 mAh/g, (lower than 33%). The discharge-charge cyclability of the produced electrode exceeded 300 cycles at 100% of the initial reversible capacity.

The reversible capacity of 527 mAh/g was obtained at a 20 hour discharge rate. At a 24 min. (²/₅ hour) discharge rate, the reversible capacity was 95 mAh/g.

### Example III

Using the manufacturing method and the test procedure described in Example II a negative electrode with a negative electrode composition composed of 95% by weight of thermal black (Kværner Carbon Black) and 5% by weight of binder (EPDM) was produced, said electrode providing a reversible capacity of 580 mAh/g, an irreversible capacity loss of 348 mAh/g (37.5% of initial capacity), a discharge-charge cyclability of more than 20 cycles at 80% of the initial reversible capacity.

The reversible capacity of 580 mAh/g was obtained at a 10 hour discharge rate. At a 12 min. (¹/₅ hour) discharge rate, the reversible capacity was 116 mAh/g.

### Example IV

Using a lithium salt containing organic electrolyte, the manufacturing method and the test procedure described in Example I, a negative electrode with a negative electrode composition composed of 63% by weight of graphite (Lonza Graphite KS6), 30% by weight of lampblack (Degussa Lampblack 101) and 7% by weight of binder (EPDM) was produced, said electrode providing a reversible capacity of 330 mAh/g, an irreversible capacity loss of 100 mAh/g (23% of initial capacity) and a discharge-charge cyclability exceeding 300 cycles at 85% of the initial reversible capacity.

In the following Example V production of lithium secondary batteries containing as negative electrodes an electrode composition as described in the preceding examples is illustrated.

### Example V

Electrochemical cells were prepared from the negative electrode laminates of the above Examples I to IV, laminates of a transition metal oxide positive electrode coated on an aluminium foil and sandwiched between the said laminates an electrolyte composed of lithium salt in an organic electrolyte.

## Claims

1. A method for the production of a lithium secondary battery which comprises:
forming a negative electrode precursor composition in the form of a uniform viscous slurry by grinding carbon in a solvent containing a binder;
coating the negative electrode precursor composition onto a substrate;
evaporating the solvent and drying at elevated temperature to form a negative electrode comprising a negative electrode composition comprising carbon as negative electrode active material coated onto the substrate; and
assembling the negative electrode into a cell together with a positive electrode and a non-aqueous electrolyte including a lithium salt,
**characterised in that**
the carbon used to form the negative electrode precursor composition comprises a carbon black having a BET specific surface area of at most 20m²/g in an amount of at least 10% by weight of the negative electrode composition.

2. A method according to claim 1 wherein the carbon black has a BET specific surface area of 2 to 20m²/g.

3. A method according to claim 1 or 2 wherein the carbon black is a lampblack, a thermal black or a mixture thereof.

4. A method according to claim 3 wherein the carbon black is a lampblack having a BET specific surface area of 5 to 20m²/g.

5. A method according to claim 4 wherein the lampblack has a BET specific surface area of 15 to 20m²/g.

6. A method according to claim 3 wherein the carbon black is a thermal black having a BET specific surface area of 2 to 10m²/g.

7. A method according to any of claims 1 to 6 wherein the carbon black comprises at least 80% by weight of the negative electrode composition.

8. A method according to any of claims 1 to 6 wherein the negative electrode composition comprises:
10 to 90% by weight of the carbon black;
0 to 89% by weight of a more ordered carbon material; and
1 to 10% by weight of a binder.

9. A method according to any of claims 1 to 6 wherein the negative electrode composition comprises:
10 to 40% by weight of the carbon black;
50 to 89% by weight of a more ordered carbon material; and
1 to 10% by weight of a binder.

10. A method according to claim 8 or 9 wherein the more ordered carbon material is coke and/or graphite.

11. A method according to any of claims 1 to 10 wherein the positive electrode is based on a transition metal oxide compound as positive electrode active material.

12. A method according to claim 11 wherein the transition metal oxide compound is a vanadium oxide or a spinel lithium manganese oxide.

13. A method according to any of claims 1 to 12 wherein the substrate is a metal foil.

14. Use of a carbon black having a BET specific surface area of at most 20m²/g for the formation of a negative electrode precursor composition also comprising binder and solvent, said negative electrode precursor composition on coating onto a substrate, evaporating the solvent and drying at elevated temperature providing a negative electrode for a lithium secondary battery in the form of a negative electrode composition coated onto the substrate, said carbon black comprising at least 10% by weight of said negative electrode composition and said negative electrode, when assembled into a cell together with a positive electrode and a non-aqueous electrolyte including a lithium salt, providing a cell with an irreversible capacity loss of less than 37.5% of its initial capacity.

15. Use according to claim 14 wherein the carbon black is a lampblack, a thermal black or a mixture thereof.

## Patentansprüche

1. Verfahren zur Herstellung einer sekundären Lithium-Sekundärbatterie, umfassend:
Bildung der Vorstufenmasse für eine negative Elektrode in Form einer einheitlichen viskosen Aufschlämmung durch Mahlen von Kohlenstoff in einem ein Bindemittel enthaltenden Lösungsmittel;
Auftragen der Vorstufenmasse für die negative Elektrode auf ein Substrat;
Verdampfen des Lösungsmittels und Trocknen bei erhöhter Temperatur unter Bildung einer negativen Elektrode, umfassend eine Masse für die negative Elektrode, umfassend Kohlenstoff als aktives Material für die negative Elektrode, aufgetragen auf ein Substrat; und
Zusammenbau der negativen Elektrode, einer positiven Elektrode und eines nichtwässrigen Elektrolyten, enthaltend ein Lithiumsalz, zu einer Zelle,
**dadurch gekennzeichnet, dass**
der Kohlenstoff, der zur Bildung der Vorstufenmasse für die negative Elektrode verwendet wird, einen Ruß umfasst mit einer spezifischen BET-Oberfläche von höchstens 20 m²/g in einer Menge von mindestens 10 Gew.-%, bezogen auf die Masse für die negative Elektrode.

2. Verfahren nach Anspruch 1, wobei der Ruß eine spezifische BET-Oberfläche von 2 bis 20 m²/g besitzt.

3. Verfahren nach Anspruch 1 oder 2, wobei der Ruß ein Lampenruß, ein termischer Ruß oder ein Gemisch davon ist.

4. Verfahren nach Anspruch 3, wobei der Ruß ein Lampenruß mit einer spezifischen BET-Oberfläche von 5 bis 20 m²/g ist.

5. Verfahren nach Anspruch 4, wobei der Lampenruß eine spezifische BET-Oberfläche von 15 bis 20 m²/g besitzt.

6. Verfahren nach Anspruch 3, wobei der Ruß ein thermischer Ruß mit einer spezifischen BET-Oberfläche von 2 bis 10 m²/g ist.

7. Verfahren nach einem der Ansprüche 1 bis 6, wobei der Ruß mindestens 80 Gew.-% der Masse für die negative Elektrode ausmacht.

8. Verfahren nach einem der Ansprüche 1 bis 6, wobei die Masse für die negative Elektrode umfasst:
10 bis 90 Gew.-% Ruß;
0 bis 89 Gew.-% eines stärker geordneten Kohlenstoffmaterials; und
1 bis 10 Gew.-% eines Bindemittels.

9. Verfahren nach einem der Ansprüche 1 bis 6, wobei die Masse der negativen Elektrode umfasst:
10 bis 40 Gew.-% Ruß;
50 bis 89 Gew.-% eines stärker geordneten Kohlenstoffmaterials; und
1 bis 10 Gew.-% Bindemittel.

10. Verfahren nach Anspruch 8 oder 9, wobei das stärker geordnete Kohlenstoffmaterial Koks und/oder Graphit ist.

11. Verfahren nach einem der Ansprüche 1 bis 10, wobei die positive Elektrode auf einer Übergangsmetalloxid-Verbindung als aktives Material der positiven Elektrode basiert.

12. Verfahren nach Anspruch 11, wobei die Übergangsmetalloxid-Verbindung Vanadiumoxid oder ein Lithiummanganoxid-Spinell ist.

13. Verfahren nach einem der Ansprüche 1 bis 12, wobei das Substrat eine Metallfolie ist.

14. Verwendung von Ruß mit einer spezifischen BET-Oberfläche von höchstens 20 m²/g für die Bildung einer Vorstufenmasse für eine negative Elektrode, ebenfalls umfassend ein Bindemittel und ein Lösungsmittel, wobei die Vorstufenmasse für die negative Elektrode durch Auftragen auf ein Substrat, Verdampfen des Lösungsmittels und Trocknen bei erhöhter Temperatur eine negative Elektrode für eine Lithium-Sekundärbatterie in Form einer Masse für eine negative Elektrode, aufgetragen auf ein Substrat, ergibt, wobei der Ruß mindestens 10 Gew.-% der Masse für die negative Elektrode ausmacht und die negative Elektrode, wenn sie zusammen mit einer positiven Elektrode und einem nichtwässrigen Elektrolyt, umfassend ein Lithiumsalz, zu einer Zelle zusammengebaut wird, eine Zelle mit einem irreversiblen Kapazitätsverlust von weniger als 37,5% ihrer Anfangskapazität ergibt.

15. Verwendung nach Anspruch 14, wobei der Ruß ein Lampenruß, ein thermischer Ruß oder ein Gemisch davon ist.

## Revendications

1. Procédé pour la fabrication d'une batterie d'accumulateurs au lithium qui comprend les étapes consistant à :
former une composition de précurseur d'électrode négative sous la forme d'une suspension visqueuse uniforme en broyant du carbone dans un solvant contenant un liant ;
enduire la composition de précurseur d'électrode négative sur un substrat ;
évaporer le solvant et sécher à température élevée pour former une électrode négative comprenant une composition d'électrode négative contenant du carbone comme matière active d'électrode négative enduite sur le substrat ; et
assembler l'électrode négative dans une pile avec une électrode positive et un électrolyte non aqueux comprenant un sel de lithium,
**caractérisé en ce que**
le carbone utilisé pour former la composition de précurseur d'électrode négative comprend un noir de carbone ayant une surface spécifique BET d'au moins 20 m²/g dans une proportion d'au moins 10 % en poids de la composition d'électrode négative.

2. Procédé selon la revendication 1 dans lequel le noir de carbone a une surface spécifique BET de 2 à 20 m²/g.

3. Procédé selon la revendication 1 ou 2 dans lequel le noir de carbone est un noir de lampe, un noir thermal ou un mélange de ceux-ci.

4. Procédé selon la revendication 3 dans lequel le noir de carbone est un noir de lampe ayant une surface spécifique BET de 5 à 20 m²/g.

5. Procédé selon la revendication 4 dans lequel le noir de lampe a une surface spécifique BET de 15 à 20 m²/g.

6. Procédé selon la revendication 3 dans lequel le noir de carbone est un noir thermal ayant une surface spécifique BET de 2 à 10 m²/g.

7. Procédé selon l'une quelconque des revendications 1 à 6 dans lequel le noir de carbone comprend au moins 80 % en poids de composition d'électrode négative.

8. Procédé selon l'une quelconque des revendications 1 à 6 dans lequel la composition d'électrode négative comprend :
10 à 90 % en poids de noir de carbone ;
0 à 89 % en poids d'un matériau de carbone plus ordonné ; et
1 à 10 % en poids d'un liant.

9. Procédé selon l'une quelconque des revendications 1 à 6 dans lequel la composition d'électrode négative comprend :
10 à 40 % en poids de noir de carbone ;
50 à 89 % en poids d'un matériau de carbone plus ordonné ; et
1 à 10 % en poids d'un liant.

10. Procédé selon la revendication 8 ou 9 dans lequel le matériau de carbone plus ordonné est le coke et/ou le graphite.

11. Procédé selon l'une quelconque des revendications 1 à 10 dans lequel l'électrode positive est basée sur un composé d'oxyde de métal de transition comme matière active d'électrode positive.

12. Procédé selon la revendication 11 dans lequel le composé d'oxyde de métal de transition est un oxyde de vanadium ou un oxyde de spinelle de lithium-manganèse.

13. Procédé selon l'une quelconque des revendications 1 à 12 dans lequel le substrat est une feuille de métal.

14. Utilisation d'un noir de carbone ayant une surface spécifique BET inférieure ou égale à 20 m²/g pour la formation d'une composition de précurseur d'électrode négative comprenant également un liant et un solvant, ladite composition de précurseur d'électrode négative après enduction sur un substrat, évaporation du solvant et séchage à température élevée formant une électrode négative pour une batterie d'accumulateurs au lithium sous la forme d'une composition d'électrode négative enduite sur le substrat, ledit noir de carbone comprenant au moins 10 % en poids de ladite composition d'électrode négative et ladite électrode négative, une fois assemblées dans une pile avec une électrode positive et un électrolyte non aqueux contenant un sel de lithium, formant une pile ayant une perte de capacité irréversible inférieure à 37,5 % de sa capacité initiale.

15. Utilisation selon la revendication 14 dans laquelle le noir de carbone est un noir de lampe, un noir thermal ou un mélange de ceux-ci.
